# FASCICULE DE BREVET EUROPEEN

(11) **EP 3 230 343 B1**
(45) Date de publication et mention de la délivrance du brevet: **25.01.2023**
(21) Numéro de dépôt: 15823623.2
(22) Date de dépôt: 09.12.2015
(51) Int. Cl.: C08G 69/04, C08G 69/28, C08G 69/36

(54) **PROCEDE DE PREPARATION D'UN POLYAMIDE SEMI-AROMATIQUE**
HERSTELLUNGSVERFAHREN FÜR HALBAROMATISCHES POLYAMID
SEMI-AROMATIC POLYAMIDE PREPARATION METHOD

(30) Priorité: 12.12.2014 FR 1462304
(43) Date de publication de la demande: 18.10.2017
(73) Titulaire: Arkema France, 92700 Colombes (FR)
(72) Inventeur: ALZONNE, Nicolas, 27110 Rouge Perriers (FR); BRIFFAUD, Thierry, 27300 Bernay (FR)
(86) Numéro de dépôt international: PCT/FR2015/053389
(87) Numéro de publication internationale: WO 2016/092209

(56) Documents cités:
- WO-A1-2012/173105
- WO-A1-2014/125219
- DE-A1- 19 546 417
- DE-A1- 19 621 088
- FR-A1- 2 407 234

## Description

La présente invention a pour objet, un procédé de préparation d'un copolyamide semi-aromatique mettant en oeuvre un acide aliphatique spécifique, ainsi que l'utilisation de cet acide comme limiteur de chaîne pour le copolyamide semi-aromatique et l'utilisation du copolyamide. L'invention se rapporte également à une composition comprenant un tel copolyamide ainsi qu'aux utilisations de cette composition.

Il est connu d'utiliser l'acide stéarique comme limiteur de chaîne dans la synthèse de polyamides semi-aromatiques. En effet, la synthèse de polyamide se fait par polycondensation d'un diacide et d'une diamine, d'un aminoacide ou encore d'un lactame. Ainsi, les fonctions amines vont réagir avec les fonctions acides pour former le groupe amide. Afin de mieux contrôler cette polycondensation, il est connu d'ajouter au milieu réactionnel un monoacide carboxylique qui va réagir avec les fonctions amines présentes dans le milieu et bloquer ainsi la polycondensation.

Il est connu d'utiliser des acides monocarboxyliques, tels l'acide stéarique ou l'acide benzoïque pour la synthèse de polyamide semi-aromatique, en particulier du polyamide PA11/10.T c'est-à-dire le polyamide issu de la polycondensation de l'acide 11-amino-undécanoïque, de la 1,10-décanediamine et de l'acide téréphtalique. Or, lors de la synthèse industrielle de ce copolyamide, il a été observé la formation de mousse en quantité importante et notamment de l'acide stéarique. Malgré l'ajout d'un agent anti-mousse au milieu réactionnel, il est observé une augmentation du niveau du produit dans le réacteur. De ce fait, pour éviter l'entraînement de matière ou sa solidification en haut du réacteur, il est nécessaire de réduire la charge totale introduite.

Ainsi, il existe un réel besoin de trouver un procédé de synthèse ne conduisant pas à la formation de mousse du milieu réactionnel. De façon surprenante, la Demanderesse a trouvé que l'utilisation d'un acide aliphatique linéaire en C₁-C₇ comme limiteur de chaîne, contrairement aux acides gras et acides carboxyliques aromatiques permettait d'éviter ce phénomène de mousse et permettait de ce fait d'éviter l'utilisation d'agent antimousse au cours de ce procédé de synthèse.

Par conséquent, l'invention porte sur le procédé de préparation d'un copolyamide semi-aromatique comprenant au moins deux motifs répondant à la formulation générale suivante A/10.T dans laquelle
- A désigne un motif obtenu à partir de la polycondensation d'un lactame ou d'un amino-acide en C9-C12,
- 10.T désigne un motif obtenu à partir de la polycondensation de la 1,10-décanediamine et de l'acide téréphtalique,
caractérisé en ce qu'il comprend une étape de polycondensation des comonomères : l'acide aminé ou le lactame, 1,10-décanediamine et acide téréphtalique en présence d'au moins un acide aliphatique linéaire en C₁-C₇, le niveau de moussage dans le réacteur étant substantiellement diminué par rapport au niveau observé sans ledit acide aliphatique linéaire.

L'invention a aussi pour objet l'utilisation d'un acide aliphatique linéaire en C₁-C₇ en tant que limiteur de chaîne dans la synthèse du copolyamide tel que défini ci-dessus pour diminuer substantiellement le niveau de moussage lors de la polycondensation d'un copolyamide semi-aromatique dans un réacteur.

D'autres caractéristiques, aspects et avantages de la présente invention apparaîtront encore plus clairement à la lecture de la description et des exemples qui suivent.

### Le procédé

L'invention porte sur un procédé de préparation d'un copolyamide semi-aromatique comprenant au moins deux motifs répondant à la formulation générale suivante A/10.T dans laquelle
- A désigne un motif obtenu à partir de la polycondensation d'un lactame ou d'un amino-acide en C₉-C₁₂,
- 10.T désigne un motif obtenu à partir de la polycondensation de la 1,10-décanediamine et de l'acide téréphtalique,
caractérisé en ce qu'il comprend une étape de polycondensation des comonomères : l'amino-acide ou le lactame, 1,10-décanediamine et acide téréphtalique en présence d'au moins un acide aliphatique linéaire en C₁-C₇ en proportion en poids par rapport au poids total de tous les constituants introduits dans le réacteur de 0,1% à 3%, en particulier de 0,1 à 1 %, le niveau de moussage dans le réacteur étant substantiellement diminué lors de l'étape de polycondensation par rapport au niveau observé sans acide aliphatique linéaire en C₁-C₇, l'étape de polycondensation étant effectuée en trois étapes, telles que définies dans la revendication 1.

Les inventeurs ont donc trouvé que l'utilisation d'un acide aliphatique linéaire en C₁-C₇ à courte chaîne (C₁-C₇), en tant que limiteur de chaîne, en particulier l'acide acétique permettait la préparation industrielle d'un copolyamide semi-aromatique en diminuant substantiellement le niveau de moussage dans le réacteur lors de l'étape de polycondensation des comonomères par rapport au niveau observé sans acide aliphatique linéaire en C₁-C₇.

Avantageusement, l'acide aliphatique linéaire en C₁-C₇ à courte chaîne (C₁-C₇) est un monoacide.

Par le terme « substantiellement », il faut entendre une diminution d'au moins 10% du niveau de moussage par rapport au niveau observé sans acide aliphatique linéaire en C₁-C₇.L'utilisation d'un acide aliphatique linéaire limite le phénomène de moussage et évite donc l'entrainement de matière ou sa solidification en haut du réacteur et ne nécessite donc pas de réduire la charge totale de comonomères introduite permettant ainsi un gain de temps et de coût lors de la préparation d'une même quantité de copolyamide semi-aromatique.

Par conséquent, la présence d'un acide aliphatique linéaire dans ledit procédé permet d'effectuer le procédé sur une taille importante de réacteur, en tout état de cause sur une taille supérieure à celle utilisée en l'absence dudit acide aliphatique linéaire même en présence d'agent anti-mousse.

Ainsi, par exemple, pour un réacteur d'une capacité de 1 tonne, une diminution d'au moins 10% du niveau de moussage dans ledit réacteur permet de pouvoir y introduire au moins 100 kg de monomères en plus.

Dans un mode de réalisation, l'étape de polycondensation est effectuée en l'absence d'agent anti-mousse.

Un autre avantage de l'invention est donc la suppression possible de l'utilisation d'un agent anti-mousse permettant ainsi une économie de coût du procédé.

Dans un autre mode de réalisation, un agent anti-mousse est également utilisé, notamment en proportion en poids par rapport au poids total de tous les constituants introduits dans le réacteur de 1 à 500 ppm, en particulier de 10 à 250 ppm, et plus particulièrement de 10 à 50 ppm.

Les agents anti-mousse habituellement utilisés sont à base de silicium ou non, notamment des huiles silicone brutes ou sous forme de dispersion aqueuses, telles que Silikonol1000, Tegiloxan AV1000, Silcolapse RG22, EFKA^{™} 2720 (BASF).

Le niveau de moussage est diminué d'au moins 10%, notamment d'au moins 20%, en particulier de 20% à environ 30% par rapport au niveau observé sans acide aliphatique linéaire en C₁-C₇. En fonction de la présence ou non d'agent anti-mousse, la diminution observée du niveau de moussage est plus ou moins importante, mais elle est de toute manière d'au moins 10% en l'absence d'agent anti-mousse.

Tous les pourcentages de diminution de moussage dans la description sont donnés par rapport au niveau observé sans acide aliphatique linéaire en C₁-C₇, quelle que soit la présence d'anti-mousse ou non.

Dans un mode de réalisation de l'utilisation selon les revendications 6 à 10, ladite étape de polycondensation est effectuée en une seule étape dans le même réacteur à une température de 200 à 300°C, en particulier supérieure à la température de fusion du copolyamide semi-aromatique, sous une pression pouvant monter jusqu'à 30 bars et progressivement réduite jusqu'à une pression égale ou inférieure à la pression atmosphérique afin de compléter la polymérisation.

La température de réaction dans cette étape de polycondensation doit être supérieure à la température de fusion du copolyamide semi-aromatique pour que l'agitation puisse être effective.

Ladite réaction produit donc intermédiairement des oligomères semi-aromatiques qui, par condensation entre eux, conduisent directement au copolyamide semi-aromatique dans le même réacteur.

Le niveau de moussage est donc abaissé d'au moins 10% notamment d'au moins 20%, en particulier de 20% à environ 30% dans ledit réacteur.

Optionnellement, le polymère peut être retiré dudit réacteur à une pression supérieure à la pression atmosphérique. La polymérisation peut alors être éventuellement complétée par une étape d'extrusion à une température supérieure à la température de fusion, ou par une étape de chauffage à une température inférieure à la température de fusion du copolyamide selon un procédé dit de « polymérisation à l'état solide ».

Dans le procédé de l'invention ou dans un autre mode de réalisation de l'utilisation, l'étape de polycondensation est effectuée en trois étapes et comprend les étapes suivantes :
a. une première étape de prépolymérisation dans un concentrateur par chauffage des comonomères en présence dudit au moins acide aliphatique, à une température comprise de 200°C à 300°C, notamment sous une pression comprise de 20 à 30 bars pour obtenir un prépolymère semi-aromatique, ladite température étant notamment à une température supérieure à la température de fusion du prépolymère;
b. une seconde étape de transfert du prépolymère du concentrateur vers un polymériseur à une température comprise de 220 à 280°C sous une pression de 10 à 20 bars;
c. une troisième étape de polymérisation par chauffage à une température comprise de 200 à 300°C sous une pression pouvant aller jusqu'à 30 bars, progressivement réduite jusqu'à une pression égale ou inférieure à la pression atmosphérique afin de compléter la polymérisation pour obtenir ledit copolyamide, ladite température étant notamment à une température supérieure à la température de fusion dudit copolyamide.

Optionnellement, le polymère après complétion de la polymérisation dans l'étape c. peut être retiré dudit polymériseur à une pression supérieure à la pression atmosphérique. La polymérisation peut alors être éventuellement complétée par une étape d'extrusion à une température supérieure à la température de fusion, ou par une étape de chauffage à une température inférieure à la température de fusion du copolyamide selon un procédé dit de « polymérisation à l'état solide ».

La première étape correspond à la formation dans le concentrateur du prépolymère semi-aromatique de masse moléculaire (Mn) comprise d'environ 1000 à 8000 tel que déterminé par RMN.

La deuxième étape correspond au transfert du prépolymère semi-aromatique dans un polymérisateur. Cette étape s'accompagne en règle générale d'une baisse de pression puis le copolyamide semi-aromatique est formé dans la troisième étape par condensation du prépolymère sur lui-même par chauffage notamment supérieur à la température de fusion du polymère. Avantageusement, la température de chauffage pour obtenir le copolyamide semi-aromatique dans cette troisième étape est supérieure de 10°C à la température de fusion dudit copolyamide.

Dans un mode de réalisation, la diminution du niveau de moussage a lieu au moins lors de la première étape, dans le concentrateur, et est en particulier d'au moins 10%, notamment d'au moins 20%, en particulier de 20% à environ 30%.

Avantageusement, la diminution du niveau de moussage a lieu lors de la première étape, dans le concentrateur et est en particulier d'au moins 10%, notamment d'au moins 20%, en particulier de 20% à environ 30%, ainsi que lors de la troisième étape dans le polymériseur et est en particulier d'au moins 10%, notamment d'au moins 19%, en particulier de 19% à environ 30%.

L'acide aliphatique linéaire en C₁-C₇ est en proportion en poids par rapport au poids total de tous les constituants introduits dans le réacteur de 0,1% à 3%, en particulier de 0,1 à 1 %.

De préférence, l'acide aliphatique linéaire en C₁-C₇ est choisi parmi l'acide acétique, l'acide propanoïque, et l'acide butanoïque et leur mélange. Préférentiellement, l'acide acétique ou l'acide propanoïque est utilisé, en particulier l'acide acétique.

Concernant plus précisément la signification du motif A, lorsque A représente un aminoacide, il peut être choisi parmi l'acide 9-aminononanoïque (A=9), l'acide 10-aminodécanoïque (A=10), l'acide 12-aminododécanoïque (A=12) et l'acide 11-aminoundécanoïque (A=11) ainsi que ses dérivés, notamment l'acide N-heptyl-11-aminoundécanoïque.

A la place d'un aminoacide, on pourrait également envisager un mélange de deux, trois,... ou plusieurs aminoacides. Toutefois, les copolyamides formés comprendraient alors trois, quatre,... ou plus, motifs, respectivement.

Lorsque A représente un lactame, il peut être choisi parmi le pelargolactame, le décanolactame, l'undécanolactame, et le lauryllactame (A=12).

De préférence, A désigne un motif obtenu à partir d'un monomère choisi parmi l'acide amino-11-undécanoïque (noté 11), l'acide amino-12-dodécanoïque (noté 12) et le lauryllactame (noté L12).

De préférence, A désigne l'acide amino-11-undécanoïque (noté 11).

L'invention a aussi pour objet l'utilisation d'un acide aliphatique linéaire en C₁-C₇ en tant que limiteur de chaîne dans la synthèse du copolyamide tel que défini ci-dessus, pour diminuer substantiellement le niveau de moussage dans un réacteur lors de l'étape de polycondensation des comonomères par rapport au niveau observé sans acide aliphatique linéaire en C₁-C₇, ledit acide aliphatique linéaire en C₁-C₇ étant en proportion en poids par rapport au poids total de tous les constituants introduits dans le réacteur de 0,1% à 3%, en particulier de 0,1 à 1 %.

Avantageusement, l'acide aliphatique linéaire en C₁-C₇ est un monoacide.

Avantageusement, l'utilisation d'un acide aliphatique linéaire en C₁-C₇ définie ci-dessus est effectuée en l'absence d'agent anti-mousse.

Avantageusement, l'acide aliphatique linéaire en C₁-C₇ peut être utilisé dans un procédé dans lequel l'étape de polycondensation est effectuée dans le même réacteur en une seule étape tel que défini ci-dessus, ou dans un procédé dans lequel l'étape de polycondensation est effectuée en trois étapes tel que défini ci-dessus.

Le niveau de moussage observé, avec l'utilisation d'un acide aliphatique linéaire en C₁-C₇ définie ci-dessus, est diminué d'au moins 10%, notamment d'au moins 20%, en particulier de 20% à environ 30% par rapport au niveau observé sans acide aliphatique linéaire en C₁-C₇.

L'acide aliphatique linéaire en C₁-C₇ est en proportion en poids par rapport au poids total de tous les constituants introduits dans le réacteur de 0,1% à 3%, en particulier de 0,1 à 1 %.

Avantageusement, l'acide aliphatique linéaire en C₁-C₇ est choisi parmi l'acide acétique et l'acide propanoïque, en particulier l'acide aliphatique linéaire en C₁-C₇ est l'acide acétique.

Avantageusement, l'utilisation d'un acide aliphatique linéaire en C₁-C₇ définie ci-dessus est effectuée avec un copolyamide 11/10.T.

Les exemples suivants servent à illustrer l'invention sans toutefois présenter un caractère limitatif.

### EXEMPLES :

Comparaison du niveau de moussage lors de la préparation d'un PA 11/10T (0.7/1 moles %) en présence d'acide stéarique ou d'acide acétique dans un procédé comprenant une étape de polycondensation en trois étapes.

Les comonomères comprenant de l'acide stéarique ou de l'acide acétique, de l'hypophosphite de sodium, du silikonol 1000 et de l'eau en proportions telle que définies dans le tableau I ci-dessous sont chargés dans le concentrateur et chauffés à une température comprise de 200 à 300°C à une pression comprise de 20 à 30 bars pour former un prépolymère puis le prépolymère est transféré dans un polymériseur et le prépolymère est alors chauffé dans le polymériseur à une température comprise de 200°C à 300°C sous une pression de 20 à 30 bars, puis la pression est progressivement réduite jusqu'à la pression atmosphérique.

| **Composants** | **Exemple comparatif : Avec acide stéarique Masse (Kg)** | **Exemple 1 Avec acide acétique Masse (Kg)** |
|---|---|---|
| **1, 10-Décane diamine** | **129,7** | **129,7** |
| **acide amino-11-undécanoïque** | **100** | **100** |
| **Acide téréphtalique** | **120,8** | **120,8** |
| **Acide acétique** | **-** | **2,5** |
| **Acide stéarique** | **8,3** | **-** |
| **NaH₂PO₂ à 60%** | **1,4** | **1,4** |
| **Silikonol^{®} 1000** | **0,07** | **0,07** |
| **Eau** | **73** | **73** |

Le niveau de moussage est déterminé au moyen d'un détecteur permettant de mesurer le niveau maximum du milieu réactionnel dans le concentrateur et dans le polymériseur pour chaque composé (exemple 1 et exemple comparatif).

| | **Niveau dans le concentrateur (% du niveau maximum du réacteur)** | **Niveau dans le polymériseur (% du niveau maximum du réacteur)** |
|---|---|---|
| **Exemple comparatif : Avec acide stéarique** | **70,02 (n = 20)** | **71,03 (n = 24)** |
| **Exemple 1 Avec acide acétique** | **54,17 (n = 6)** | **57,16 (n = 6)** |
| **% de diminution du moussage** | **22,64 %** | **19,5 %** |

Le même type de résultats a été observé avec un procédé en une étape dans un seul réacteur.

## Revendications

1. Procédé de préparation industriel d'un copolyamide semi-aromatique de formule générale A/10.T dans laquelle
- A désigne un motif obtenu à partir de la polycondensation d'un lactame ou d'un amino-acide en C9-C12,
- 10.T désigne un motif obtenu à partir de la polycondensation de la 1,10-décanediamine et de l'acide téréphtalique,
**caractérisé en ce qu'**il comprend une étape de polycondensation des comonomères : l'amino-acide ou le lactame, 1,10-décanediamine et acide téréphtalique en présence d'au moins un acide aliphatique linéaire en C₁-C₇ en proportion en poids par rapport au poids total de tous les constituants introduits dans le réacteur de 0,1% à 3%, en particulier de 0,1 à 1 %, le niveau de moussage dans le réacteur étant diminué d'au moins 10% lors de l'étape de polycondensation par rapport au niveau observé sans acide aliphatique linéaire en C₁-C₇, l'étape de polycondensation étant effectuée en trois étapes et comprenant les étapes suivantes :
a. une première étape de prépolymérisation dans un concentrateur par chauffage des comonomères en présence dudit au moins acide aliphatique, à une température comprise de 200°C à 300°C sous une pression notamment comprise de 20 à 30 bars pour obtenir un prépolymère, ladite température étant notamment à une température supérieure à la température de fusion du prépolymère;
b. une seconde étape de transfert du prépolymère du concentrateur vers un polymériseur à une température comprise de 220 à 280°C sous une pression de 10 à 20 bars;
c. une troisième étape de polymérisation par chauffage à une température comprise de 200 à 300°C sous une pression pouvant aller jusqu'à 30 bars, puis réduite jusqu'à une pression égale ou inférieure à la pression atmosphérique afin de compléter la polymérisation pour obtenir ledit copolyamide, ladite température étant notamment à une température supérieure à la température de fusion dudit copolyamide,
et dans lequel la diminution du niveau de moussage a lieu au moins lors de la première étape, dans le concentrateur.

2. Procédé de préparation industriel selon la revendication 1, dans lequel l'étape de polycondensation est effectuée en l'absence d'agent anti-mousse.

3. Procédé selon l'une des revendications 1 ou 2, dans laquelle le niveau de moussage est diminué d'au moins 20%, en particulier d'au moins 20% à environ 30% par rapport au niveau observé sans acide aliphatique linéaire en C₁-C₇.

4. Procédé de préparation industriel selon l'une des revendications 1 à 3, dans lequel l'acide aliphatique linéaire est choisi parmi l'acide propanoïque et l'acide acétique, en particulier l'acide aliphatique linéaire est l'acide acétique.

5. Procédé de préparation industriel selon l'une des revendications 1 à 4, dans lequel ledit copolyamide semi-aromatique est le 11/10.T.

6. Utilisation d'un acide aliphatique linéaire en C₁-C₇ en tant que limiteur de chaîne pour diminuer le niveau de moussage d'au moins 10% dans un réacteur lors de l'étape de polycondensation des comonomères d'un copolyamide semi-aromatique tel que défini en revendication 1 à 5 par rapport au niveau observé sans acide aliphatique linéaire en C₁-C₇, ledit acide aliphatique linéaire étant en proportion en poids par rapport au poids total de tous les constituants introduits dans le réacteur de 0,1% à 3%, en particulier de 0,1 à 1 %,.

7. Utilisation selon la revendication 6, dans laquelle l'étape de polycondensation est effectuée en l'absence d'agent anti-mousse.

8. Utilisation selon l'une des revendications 6 ou 7, dans laquelle le niveau de moussage est diminué d'au moins 20%, en particulier de 20% à environ 30% par rapport au niveau observé sans acide aliphatique linéaire en C₁-C₇.

9. Utilisation selon l'une des revendications 6 à 8, dans laquelle l'acide aliphatique linéaire est l'acide acétique.

10. Utilisation selon l'une des revendications 6 à 9, dans laquelle ledit copolyamide semi-aromatique est le 11/10.T.

## Patentansprüche

1. Verfahren zum industriellen Herstellen eines semiaromatischen Copolyamids mit der allgemeinen Formel A/10.T, wobei
- A eine Einheit bezeichnet, die aus der Polykondensation eines Lactams oder einer C9-C12-Aminosäure erhalten wird,
- 10.T eine Einheit bezeichnet, die aus der Polykondensation von 1,10-Decandiamin und Terephthalsäure erhalten wird,
**dadurch gekennzeichnet, dass** es einen Schritt der Polykondensation der Comonomere: Aminosäure oder Lactam, 1,10-Decandiamin und Terephthalsäure in Gegenwart mindestens einer linearen aliphatischen C₁-C₇-Säure in einem Gewichtsanteil, bezogen auf das Gesamtgewicht aller in den Reaktor eingebrachten Bestandteile von 0,1 % bis 3 %, besonders von 0,1 % bis 1 %, umfasst, wobei der Schäumungsgrad in dem Reaktor während des Polykondensationsschritts um mindestens 10 % im Vergleich zu dem ohne lineare aliphatische C₁-C₇-Säure beobachteten Grad verringert wird, wobei der Polykondensationsschritt in drei Stufen durchgeführt wird und die folgenden Schritte umfasst:
a. einen ersten Schritt der Präpolymerisation in einem Konzentrator durch Erwärmen der Comonomere in Gegenwart der mindestens aliphatischen Säure auf eine Temperatur zwischen 200 °C und 300 °C unter einem Druck von insbesondere 20 bis 30 bar, um ein Präpolymer zu erhalten, wobei die Temperatur insbesondere bei einer Temperatur liegt, die höher als die Schmelztemperatur des Präpolymers ist;
b. einen zweiten Schritt des Überführens des Präpolymers von dem Konzentrator zu einem Polymerisator bei einer Temperatur von 220 bis 280 °C unter einem Druck von 10 bis 20 bar;
c. einen dritten Schritt der Polymerisation durch Erwärmen auf eine Temperatur zwischen 200 und 300 °C unter einem Druck von bis zu 30 bar, der dann bis auf einen Druck gleich oder unterhalb des Atmosphärendrucks reduziert wird, um die Polymerisation zu vervollständigen, um das Copolyamid zu erhalten, wobei die Temperatur insbesondere bei einer Temperatur höher als die Schmelztemperatur des Copolyamids ist,
und wobei die Verringerung des Schäumungsgrades mindestens bei dem ersten Schritt in dem Konzentrator stattfindet.

2. Verfahren zum industriellen Herstellen nach Anspruch 1, wobei der Polykondensationsschritt in Abwesenheit eines Entschäumers durchgeführt wird.

3. Verfahren nach einem der Ansprüche 1 oder 2, wobei der Schäumungsgrad um mindestens 20 %, besonders um mindestens 20 % bis etwa 30 %, im Vergleich zu dem Grad, der ohne lineare aliphatische C₁-C₇-Säure beobachtet wird, verringert wird.

4. Verfahren zum industriellen Herstellen nach einem der Ansprüche 1 bis 3, wobei die lineare aliphatische Säure aus Propansäure und Essigsäure ausgewählt ist, besonders die lineare aliphatische Säure Essigsäure ist.

5. Verfahren zum industriellen Herstellen nach einem der Ansprüche 1 bis 4, wobei das semiaromatische Copolyamid 11/10.T ist.

6. Verwendung einer linearen aliphatischen C₁-C₇-Säure als Kettenbegrenzer zum Verringern des Schäumungsgrads um mindestens 10 % in einem Reaktor bei dem Schritt der Polykondensation der Comonomere eines semiaromatischen Copolyamids, wie in den Ansprüchen 1 bis 5 definiert, im Vergleich zu dem Grad, der ohne lineare aliphatische C₁-C₇-Säure beobachtet wird, wobei die lineare aliphatische Säure in einem Gewichtsanteil, bezogen auf das Gesamtgewicht aller in den Reaktor eingebrachten Bestandteile, von 0,1 % bis 3 %, besonders 0,1 % bis 1 %, vorliegt.

7. Verwendung nach Anspruch 6, wobei der Polykondensationsschritt in Abwesenheit eines Entschäumers durchgeführt wird.

8. Verwendung nach einem der Ansprüche 6 oder 7, wobei der Schäumungsgrad um mindestens 20 %, besonders 20 % bis etwa 30 %, im Vergleich zu dem ohne lineare aliphatische C₁-C₇-Säure beobachteten Grad verringert ist.

9. Verwendung nach einem der Ansprüche 6 bis 8, wobei die lineare aliphatische Säure Essigsäure ist.

10. Verwendung nach einem der Ansprüche 6 bis 9, wobei das semiaromatische Copolyamid 11/10.T ist.

## Claims

1. A method for industrial preparation of a semi-aromatic copolyamide of general formula A/10.T wherein
- A denotes a unit obtained from the polycondensation of a lactam or a C9-C12 amino acid,
- 10.T denotes a unit obtained from the polycondensation of 1,10-decanediamine and terephthalic acid,
**characterized in that it** comprises a step of polycondensation of the comonomers: the amino acid or lactam, 1,10-decanediamine and terephthalic acid in the presence of at least one C₁-C₇ linear aliphatic acid in a proportion by weight with respect to the total weight of all the components introduced into the reactor from 0.1% to 3%, in particular from 0.1% to 1%, the foaming level in the reactor being reduced by at least 10% during the polycondensation step with respect to the level observed without C₁-C₇ linear aliphatic acid, the polycondensation step being carried out in three steps and comprising the following steps:
a. a first step of pre-polymerization in a concentrator by heating the comonomers in the presence of said at least aliphatic acid, to a temperature ranging from 200°C to 300°C under a pressure ranging, in particular, from 20 to 30 bar, in order to obtain a prepolymer, said temperature being, in particular, at a temperature greater than the melting temperature of the prepolymer;
b. a second step of transferring the prepolymer from the concentrator to a polymerizer at a temperature ranging from 220°C to 280°C under a pressure of 10 to 20 bar;
c. a third step of polymerization by heating to a temperature ranging from 200°C to 300°C under a pressure of up to 30 bar, then reduced to a pressure equal to or less than atmospheric pressure in order to complete the polymerization so as to obtain said copolyamide, said temperature being in particular at a temperature higher than the melting temperature of said copolyamide,
and wherein the decrease in the foaming level takes place at least during the first step, in the concentrator.

2. The industrial preparation method according to claim 1, wherein the polycondensation step is carried out in the absence of anti-foaming agent.

3. The method according to one of claims 1 or 2, wherein the foaming level is reduced by at least 20%, in particular by at least 20% to about 30% with respect to the level observed without C₁-C₇ linear aliphatic acid.

4. The industrial preparation method according to one of claims 1 to 3, wherein the linear aliphatic acid is selected from propanoic acid and acetic acid, in particular the linear aliphatic acid is acetic acid.

5. The industrial preparation method according to one of claims 1 to 4, wherein said semi-aromatic copolyamide is 11/10.T.

6. A use of a C₁-C₇ linear aliphatic acid as a chain limiter for reducing the foaming level by at least 10% in a reactor during the polycondensation step of the comonomers of a semi-aromatic copolyamide as defined in claim 1 to 5 with respect to the level observed without C₁-C₇ linear aliphatic acid, said linear aliphatic acid being in proportion by weight with respect to the total weight of all the components introduced into the reactor from 0.1% to 3%, in particular from 0.1 to 1%.

7. The use according to claim 6, wherein the polycondensation step is carried out in the absence of anti-foaming agent.

8. The use according to one of claims 6 or 7, wherein the foaming level is reduced by at least 20%, in particular by 20% to around 30% with respect to the level observed without C₁-C₇ linear aliphatic acid.

9. The use according to one of claims 6 to 8, wherein the linear aliphatic acid is acetic acid.

10. The use according to one of claims 6 to 9, wherein said semi-aromatic copolyamide is 11/10.T.
